# EUROPEAN PATENT APPLICATION

(11) **EP 4 756 160 A1**
(43) Date of publication of application: **10.06.2026**
(21) Application number: 24217223.7
(22) Date of filing: 03.12.2024
(51) Int. Cl.: E05B 83/42, E05B 77/44, E05B 63/00

(54) **A LOCKING ARRANGEMENT AND A VEHICLE**

(71) Applicant: Volvo Truck Corporation, 405 08 Göteborg (SE)
(72) Inventor: Nallet, Sebastien, 38460 Venerieu (FR); Quibriac, Yann, 69007 Lyon (FR); Ribero, Raphael, 69390 Millery (FR)
(74) Representative: Kransell & Wennborg KB

(57) **Abstract**

The disclosure relates to a locking arrangement (1) for locking a vehicle door (110) of a vehicle (100) from an inside, the locking arrangement (1) comprising:
- a door locking device (2) arranged to lock the vehicle door (110),
- a seatbelt (3) for a vehicle user comprising a buckle locking device (31) configured to be releasably locked to a seatbelt buckle (32) such that the seatbelt (3) fastens the vehicle user to a vehicle seat (120), wherein the door locking device (2) comprises a buckle locking device receiver (21), different from the seatbelt buckle (32) and arranged to receive the buckle locking device (31). The disclosure also relates to a vehicle (100).

## Description

### TECHNICAL FIELD

The disclosure relates generally to vehicles. In particular aspects, the disclosure relates to a locking arrangement and a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Drivers of commercial vehicles may on some occasions sleep over in the vehicle, e.g., during the night. Therefore, in addition to a standard lock for the vehicle door(s), there is a desire to have an additional lock where the vehicle door(s) is/are locked from the inside, thereby increasing safety and preventing unauthorized access to the inside of the vehicle when for example the driver is asleep.

In view of the above, there is a strive to develop improved technology relating to such locks, such as to provide a locking arrangement which is safe, reliable, robust, and/or easy to use by a user of the vehicle.

### SUMMARY

According to a first aspect of the disclosure, a locking arrangement for locking a vehicle door of a vehicle from an inside is provided. The locking arrangement comprises:
- a door locking device arranged to lock the vehicle door,
- a seatbelt for a vehicle user comprising a buckle locking device configured to be releasably locked to a seatbelt buckle such that the seatbelt fastens the vehicle user to a vehicle seat, wherein

the door locking device comprises a buckle locking device receiver, different from the seatbelt buckle and arranged to receive the buckle locking device, and
the door locking device is configured such that it is arranged to lock the vehicle door when the buckle locking device is received in the buckle locking device receiver and arranged to unlock the vehicle door when the buckle locking device is released from the buckle locking device receiver. The first aspect of the disclosure may seek to at least partially provide an improved locking arrangement for locking a vehicle door. A technical benefit may include that the vehicle user, e.g., the driver, is unable to drive away with the door locking device in a locked state while also being fastened by the seatbelt. This is since the user needs to release the buckle locking device from the buckle locking device receiver in order to fasten the seatbelt to the seatbelt buckle. If the seatbelt is not properly fastened, an alarm in the vehicle will likely be initiated. Thereby, the risk of driving away with the door locking device in a locked state is mitigated. This may result in improved safety, e.g., allowing emergency personnel to more easily access the inside of the vehicle in an accident situation. The door locking device being configured such that it is arranged to unlock the vehicle door when the buckle locking device is released from the buckle locking device receiver does not necessarily mean that the vehicle door is completely unlocked. Accordingly, in some examples, the vehicle door may be arranged to be locked/unlocked by an additional lock, e.g., by a standard lock which for example automatically locks the vehicle door when the vehicle is in motion.

Optionally in some examples, including in at least one preferred example, the door locking device comprises a mechanical locking element for locking the vehicle door, wherein the mechanical locking element is movable between a locked vehicle door state and an unlocked vehicle door state, and wherein the mechanical locking element and the buckle locking device receiver are mechanically connected such that a motion of the mechanical locking element from the unlocked vehicle door state to the locked vehicle door state is at least partly generated by a force created in the buckle locking device receiver when the buckle locking device is being received in the buckle locking device receiver. A technical benefit may include that a mechanical interaction is used for locking the vehicle door, and/or that hand force is used for locking the vehicle door. This may result in a more reliable, robust and/or cost-effective configuration, e.g., reducing a need of any electronic equipment for communicating between the buckle locking device receiver and the mechanical locking element.

Optionally in some examples, including in at least one preferred example, the locking arrangement further comprises an actuation device configured to release the buckle locking device from the buckle locking device receiver in response to an actuation instruction from the vehicle user. A technical benefit may include that the vehicle user more easily may release the buckle locking device, thereby unlocking the door locking device.

Optionally in some examples, including in at least one preferred example, the actuation device is provided on the buckle locking device receiver. A technical benefit may include that the actuation device is provided at a more intuitive position for the vehicle user. This may result in faster unlocking by the vehicle user when desired, e.g., in contrast to providing the actuation device at a remote location from the buckle locking device receiver, which may be more difficult to find.

Optionally in some examples, including in at least one preferred example, the actuation device comprises a button. A technical benefit may include that a reliable, robust and/or cost-effective actuation device is achieved, wherein the actuation instruction may correspond to pressing the button.

Optionally in some examples, including in at least one preferred example, the buckle locking device is a buckle tongue. A technical benefit may include that a standard part, i.e. the buckle tongue, of the seatbelt is used. This may result in a more cost-effective configuration.

Optionally in some examples, including in at least one preferred example, the locking arrangement comprises a seatbelt arrangement, wherein the seatbelt arrangement comprises the seatbelt and the seatbelt buckle.

Optionally in some examples, including in at least one preferred example, the door locking device is further arranged to lock an additional vehicle door, wherein the door locking device is configured such that it is arranged to lock the additional vehicle door when the buckle locking device is received in the buckle locking device receiver and arranged to unlock the additional vehicle door when the buckle locking device is released from the buckle locking device receiver. A technical benefit may include that also the additional vehicle door may be locked by the vehicle user when the buckle locking device is received in the buckle locking device receiver. The additional vehicle door may for example be a passenger door. The door locking device being configured such that it is arranged to unlock the additional vehicle door when the buckle locking device is released from the buckle locking device receiver does not necessarily mean that the additional vehicle door is completely unlocked. Accordingly, similar to the above, in some examples, the additional vehicle door may be arranged to be locked/unlocked by an additional lock, e.g., by a standard lock which for example automatically locks the additional vehicle door when the vehicle is in motion.

Optionally in some examples, including in at least one preferred example, the door locking device comprises an additional mechanical locking element for locking the additional vehicle door, wherein the additional mechanical locking element is movable between a locked vehicle door state and an unlocked vehicle door state, and wherein the door locking device is configured such that a motion of the additional mechanical locking element from the unlocked vehicle door state to the locked vehicle door state is at least partly initiated in response to an electric signal generated in response to the buckle locking device being received in the buckle locking device receiver. A technical benefit may include that the buckle locking device receiver may more easily be provided remote from the additional vehicle door.

According to a second aspect of the disclosure, a vehicle is provided. The vehicle comprises the vehicle door and the locking arrangement according to any example of the first aspect of the disclosure. The second aspect of the disclosure may seek to at least partially provide an improved vehicle. A technical benefit may include that the user, e.g., the driver, is unable to drive away with the door locking device in a locked state while also being fastened by the seatbelt. This is since the user needs to release the buckle locking device from the buckle locking device receiver in order to fasten the seatbelt to the seatbelt buckle. Thereby, the risk of driving away with the door locking device in a locked state is mitigated. This may result in improved safety, e.g., allowing emergency personnel to more easily access the inside of the vehicle in an accident situation. Advantages and technical benefits of the second aspect of the disclosure are analogous to the advantages and technical benefits of the first aspect of the disclosure.

Optionally in some examples, including in at least one preferred example, the buckle locking device receiver is provided in the vehicle such that when the buckle locking device is received in the buckle locking device receiver, the seatbelt is prevented from fastening the vehicle user to the vehicle seat. A technical benefit may include that the risk of driving away with the door locking device in a locked state is mitigated.

Optionally in some examples, including in at least one preferred example, the buckle locking device receiver is arranged on an inside of the vehicle door or at a position inside the vehicle adjacent the vehicle door. A technical benefit may include that the buckle locking device receiver is provided at a more intuitive position for the vehicle user, i.e., on or close to the vehicle door. A technical benefit may additionally or alternatively include that the position prevents the vehicle user from being fastened to the vehicle seat by the seatbelt. In some examples, the position inside the vehicle adjacent the vehicle door may be a position on a frame member of the vehicle which at least partly encloses the vehicle door.

Optionally in some examples, including in at least one preferred example, the buckle locking device receiver is provided on a lateral side of the vehicle seat which is facing the vehicle door. A technical benefit may include that the buckle locking device receiver is provided at a more intuitive position for the vehicle user, i.e. on or close to the vehicle door. A technical benefit may additionally or alternatively include that the position prevents the vehicle user from being fastened to the vehicle seat by the seatbelt.

Optionally in some examples, including in at least one preferred example, the vehicle seat is a driver seat. A technical benefit may include that the driver is prevented from driving away with the seatbelt fastened and with the door locking device in a locked state.

Optionally in some examples, including in at least one preferred example, the vehicle door is a door for accessing a driver seat for a driver. A technical benefit may include that the vehicle door for the driver is locked by the locking arrangement as disclosed herein. In other examples, the vehicle door is a passenger door, e.g., a door for accessing a passenger seat for a passenger.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary vehicle according to an example.
**FIG.2** is an exemplary inside of a vehicle according to an example.
**FIG. 3A** is an exemplary locking arrangement in a schematic view according to an example.
**FIG. 3B** is an exemplary locking arrangement in a schematic view according to an example.
**FIG. 4A** is an exemplary locking arrangement in a schematic view according to an example.
**FIG. 4B** is an exemplary locking arrangement in a schematic view according to an example.
**FIG. 5** is an exemplary vehicle in a schematic view according to an example.

The drawings are schematic and may not necessarily be drawn to scale. Like reference characters throughout the drawings refer to the same or similar element unless stated otherwise. Some reference characters in some of the drawings may have been omitted for the sake of clarity.

### DETAILED DESCRIPTION

The detailed description set forth below provides information and examples of the disclosed technology with sufficient detail to enable those skilled in the art to practice the disclosure.

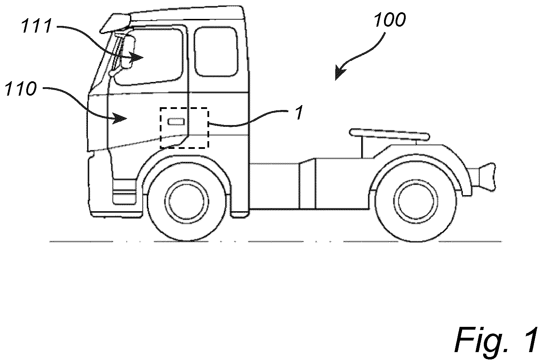

**FIG. 1** is an exemplary vehicle 100 in a side view according to an example. The vehicle 100 is in this example a truck, and more particularly a towing truck for towing one or more trailers (not shown). It shall however be noted that the vehicle may be any other type of vehicle, such as another type of truck, a bus, a passenger car, a marine vessel, or construction equipment, such as a wheel loader or an excavator. The vehicle 100 comprises a vehicle door 110, which may be a door for a driver. Alternatively, the vehicle door 110 may be a door for a passenger. The vehicle door 110, when opened, may give access to an inside of a vehicle cabin 111. The vehicle cabin 111 may comprise a bed (not shown). Thereby, the vehicle user may sleep over in the vehicle cabin 111. The vehicle 100 comprises a locking arrangement 1 according to any example of the locking arrangement 1 disclosed herein.

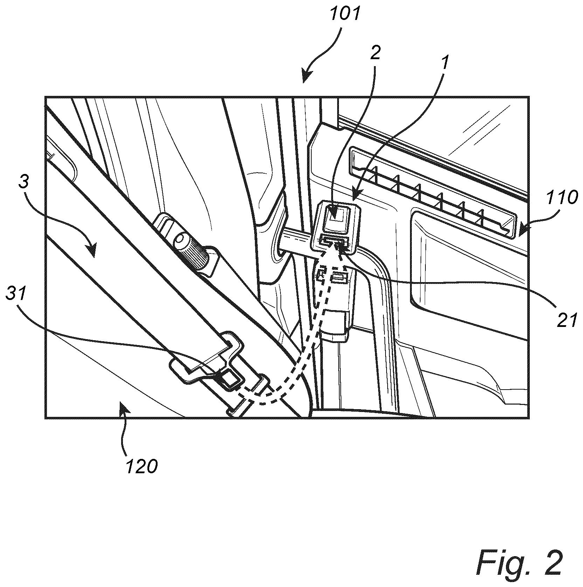

**FIG.2** is an exemplary inside 101 of a vehicle 100 according to an example. For example, the inside 101 in FIG. 2 may be the inside of the vehicle cabin 111 in FIG. 1. In the shown example, the inside 101 comprises an inside of a vehicle door 110, e.g., the vehicle door 110 shown in FIG. 1, a vehicle seat 120, such as a driver seat, and a seatbelt 3 for the vehicle seat 120. Furthermore, a locking arrangement 1 for locking the vehicle door 110 from the inside 101 is shown.

The locking arrangement 1 comprises a door locking device 2 arranged to lock the vehicle door 110.

The locking arrangement 1 further comprises the seatbelt 3 for the vehicle user and the seatbelt 3 comprises a buckle locking device 31 configured to be releasably locked to a seatbelt buckle 32 (not shown) such that the seatbelt 3 fastens the vehicle user to the vehicle seat 120.

The door locking device 2 comprises a buckle locking device receiver 21, which is different from the seatbelt buckle 32. The buckle locking device receiver 21 is arranged to receive the buckle locking device 31. The buckle locking device receiver 21 may as shown comprise an opening 21 through which the buckle locking device 31 is insertable.

As shown, the buckle locking device 31 may be a buckle tongue on the seatbelt 3, e.g., the buckle tongue 31 may be attached to the seatbelt 3 such that it can slide along a longitudinal extension of the seatbelt 3. The seatbelt 3 is preferably a standard seatbelt which length can be expanded and retracted by a winding member (not shown) which biases the seatbelt 3 to a retracted state.

The door locking device 2 is configured such that it is arranged to lock the vehicle door 110 when the buckle locking device 31 is received in the buckle locking device receiver 21 and arranged to unlock the vehicle door 110 when the buckle locking device 31 is released from the buckle locking device receiver 21.

It shall be noted that the door locking device 2 being configured such that it is arranged to unlock the vehicle door 110 when the buckle locking device 31 is released from the buckle locking device receiver 21 does not necessarily mean that the vehicle door 110 is completely unlocked. Accordingly, in some examples, the vehicle door 110 may be arranged to be locked/unlocked by an additional lock (not shown), e.g., by a standard lock which for example automatically locks the vehicle door 110 when the vehicle 100 is in motion.

In some examples, the locking arrangement 1 and/or the door locking device 2 may be denoted a night lock for locking the vehicle door 110 from the inside 101, wherein the night lock may be an additional lock to a primary (or standard) lock for the vehicle door 110.

In some examples, the buckle locking device receiver 21 may be arranged on the inside of the vehicle door 110 or at a position inside the vehicle 100 adjacent the vehicle door 110.

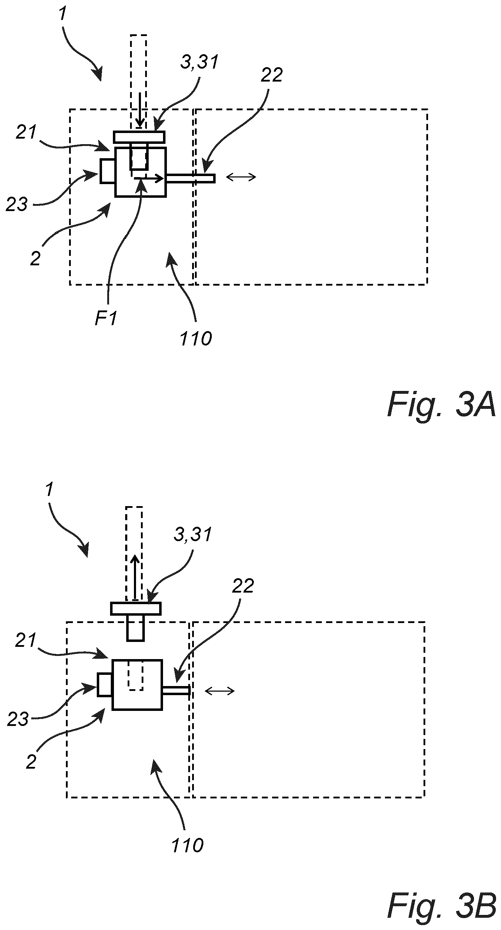

**FIGS. 3A-B** depict an exemplary locking arrangement 1 in a schematic view according to an example. For example, the locking arrangement 1 in FIGS. 3A-B may be the locking arrangement 1 in FIG. 2.

The locking arrangement 1 comprises a door locking device 2 arranged to lock the vehicle door 110. It further comprises a seatbelt 3 for a vehicle user comprising a buckle locking device 31 configured to be releasably locked to a seatbelt buckle 32 (not shown) such that the seatbelt 3 fastens the vehicle user to a vehicle seat 120 (not shown).

The door locking device 2 comprises a buckle locking device receiver 21, different from the seatbelt buckle 32 and arranged to receive the buckle locking device 31.

The door locking device 2 is configured such that it is arranged to lock the vehicle door 110 when the buckle locking device 31 is received in the buckle locking device receiver 21, as shown in FIG. 3A, and arranged to unlock the vehicle door 110 when the buckle locking device 31 is released from the buckle locking device receiver 21, as shown in FIG. 3B.

As shown, the door locking device 2 may comprise a mechanical locking element 22 for locking the vehicle door 110. By way of example, the mechanical locking element 22 may comprise a lock pin, or any other mechanical locking member, which is arranged to be actuated between a locked state as shown in FIG. 3A and an unlocked state as shown in FIG. 3B.

Accordingly, in some examples, the mechanical locking element 22 may be movable between a locked vehicle door state and an unlocked vehicle door state. As depicted, the mechanical locking element 22 and the buckle locking device receiver 21 may be mechanically connected, e.g., mechanically interact, such that a motion of the mechanical locking element 22 from the unlocked vehicle door state to the locked vehicle door state is at least partly generated by a force F1 created in the buckle locking device receiver 21 when the buckle locking device 31 is being received in the buckle locking device receiver 21. In other examples, the door locking device 2 may be configured such that a motion of the mechanical locking element 22 from the unlocked vehicle door state to the locked vehicle door state is at least partly initiated in response to an electric signal generated in response to the buckle locking device 31 being received in the buckle locking device receiver 21.

As further shown in FIGS. 3A-B, the locking arrangement 1 may further comprise an actuation device 23 configured to release the buckle locking device 31 from the buckle locking device receiver 21 in response to an actuation instruction from the vehicle user.

In some examples, and as shown in FIGS. 3A-B, the actuation device 23 is provided on the buckle locking device receiver 21. However, it shall be noted that in other examples, the actuation device may be provided at any other position in the vehicle 100, such as on or close to a dashboard (not shown). The actuation device 23 may comprise a button for the vehicle user. Pressing the button 23 may release the buckle locking device 31 from the buckle locking device receiver 21.

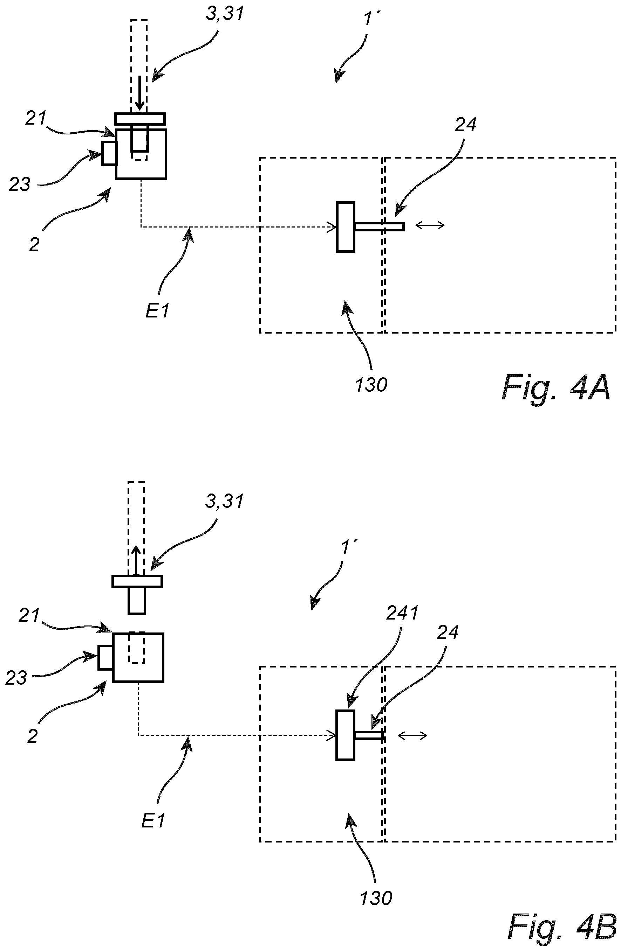

**FIGS. 4A-B** depict an exemplary locking arrangement 1' in a schematic view according to an example. The door locking device 2 and seatbelt 3 in FIGS. 4A-B may be the same as, or similar to, the door locking device 2 and seatbelt 3 shown in FIGS. 3A-B.

As shown, the door locking device 2 may further be arranged to lock an additional vehicle door 130. By way of example, the additional vehicle door 130 may be a passenger door. The door locking device 2 may be configured such that it is arranged to lock the additional vehicle door 130 when the buckle locking device 31 is received in the buckle locking device receiver 21, as shown in FIG. 4A, and arranged to unlock the additional vehicle door 130 when the buckle locking device 31 is released from the buckle locking device receiver 21, as shown in FIG. 4B.

The door locking device 2 may as shown in FIGS. 4A-B be remote from the additional vehicle door 130.

The door locking device 2 may as shown comprise an additional mechanical locking element 24, e.g., similar to the mechanical locking element 22, for locking the additional vehicle door 130. In the shown example, the additional mechanical locking element 24 is movable between a locked vehicle door state and an unlocked vehicle door state, and the door locking device 2 is configured such that a motion of the additional mechanical locking element 24 from the unlocked vehicle door state to the locked vehicle door state is at least partly initiated in response to an electric signal E1 generated in response to the buckle locking device 31 being received in the buckle locking device receiver 21. Accordingly, by way of example, the electric signal E1 may as shown be transmitted to an actuator 241 which is arranged to move the additional mechanical locking element 24. The actuator 241 may be an electromechanical actuator. Pressing the actuation device 23, e.g. the button, may unlock the additional vehicle door 130, e.g., pressing the button may result in an electric signal, i.e. a second electric signal, being transmitted to the actuator 241.

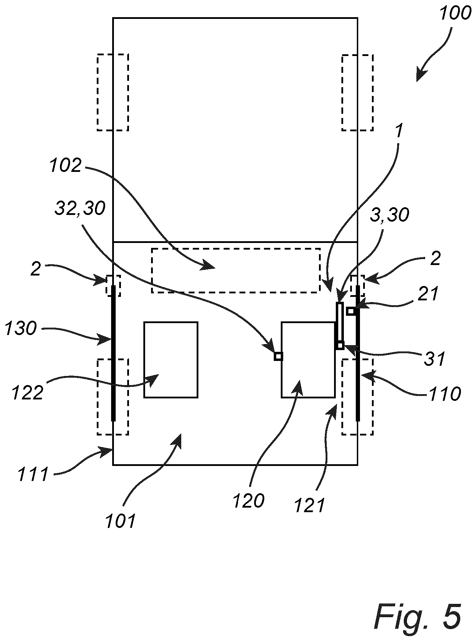

**FIG. 5** is an exemplary vehicle 100 in a schematic view according to an example. For example, the vehicle 100 in FIG. 5 may be the vehicle 100 in FIG. 1. The vehicle 100 in FIG. 5 comprises a locking arrangement 1 according to any example of the locking arrangement 1 disclosed herein.

The vehicle 100 comprises a vehicle door 110, which in this example is a door for a driver, i.e. a driver door. The vehicle door 110, when opened, gives access to an inside 101 of a vehicle cabin 111. The vehicle cabin 111 may comprise a bed 102. Thereby, the vehicle user may sleep over in the vehicle cabin 111. The vehicle 100 may as shown also comprise at least one additional vehicle door 130, as e.g. depicted in FIGS. 4A-B. The additional vehicle door 130 is in this example a passenger door.

The vehicle cabin 111 comprises a vehicle seat 120 for the driver and at least one additional vehicle seat 122 for a passenger.

As shown, the locking arrangement 1, or the vehicle 100, may comprise a seatbelt arrangement 30. The seatbelt arrangement 30 comprises the seatbelt 3 and the seatbelt buckle 32, i.e. the seatbelt buckle 32 which is used to fasten the driver to the driver seat 120 by the seatbelt 3.

As shown, the seatbelt 3 may be provided on one lateral side of the vehicle seat 120, e.g., on the side closest to the vehicle door 110, and the seatbelt buckle 32 is preferably provided on the other lateral side of the vehicle seat 120. The seatbelt arrangement 30 may be a three-point seatbelt arrangement, or at least a two-point seatbelt arrangement.

As shown in the example in FIG. 5, the buckle locking device receiver 21 is preferably provided in the vehicle 100 such that when the buckle locking device 31 is received in the buckle locking device receiver 21, the seatbelt 3 is prevented from fastening the vehicle user to the vehicle seat 120.

Further, as shown, the buckle locking device receiver 21 may be provided on a lateral side 121 of the vehicle seat 120 which is facing the vehicle door 110. As further shown in FIG. 5, the vehicle seat 120 may be a driver seat.

In the following, possible features and feature combinations of the present disclosure are presented as a list of Examples.

Example 1: A locking arrangement (1) for locking a vehicle door (110) of a vehicle (100) from an inside, the locking arrangement (1) comprising:
- a door locking device (2) arranged to lock the vehicle door (110),
- a seatbelt (3) for a vehicle user comprising a buckle locking device (31) configured to be releasably locked to a seatbelt buckle (32) such that the seatbelt (3) fastens the vehicle user to a vehicle seat (120),
wherein
the door locking device (2) comprises a buckle locking device receiver (21), different from the seatbelt buckle (32) and arranged to receive the buckle locking device (31), and
the door locking device (2) is configured such that it is arranged to lock the vehicle door (110) when the buckle locking device (31) is received in the buckle locking device receiver (21) and arranged to unlock the vehicle door (110) when the buckle locking device (31) is released from the buckle locking device receiver (21).

Example 2: The locking arrangement (1) according to Example 1, wherein the door locking device (2) comprises a mechanical locking element (22) for locking the vehicle door (110), wherein the mechanical locking element (22) is movable between a locked vehicle door state and an unlocked vehicle door state, and wherein the mechanical locking element (22) and the buckle locking device receiver (21) are mechanically connected such that a motion of the mechanical locking element (22) from the unlocked vehicle door state to the locked vehicle door state is at least partly generated by a force (F 1) created in the buckle locking device receiver (21) when the buckle locking device (31) is being received in the buckle locking device receiver (21).

Example 3: The locking arrangement (1) according to any one of the preceding Examples, further comprising an actuation device (23) configured to release the buckle locking device (31) from the buckle locking device receiver (21) in response to an actuation instruction from the vehicle user.

Example 4: The locking arrangement (1) according to Example 3, wherein the actuation device (23) is provided on the buckle locking device receiver (21).

Example 5: The locking arrangement (1) according to Example 3 or 4, wherein the actuation device (23) comprises button.

Example 6: The locking arrangement (1) according to any one of the preceding Examples, wherein the buckle locking device (31) is a buckle tongue.

Example 7: The locking arrangement (1) according to any one of the preceding Examples, comprising a seatbelt arrangement (30), the seatbelt arrangement (30) comprising the seatbelt (3) and the seatbelt buckle (32).

Example 8: The locking arrangement (1) according to any one of Examples 1-7, wherein the door locking device (2) is further arranged to lock an additional vehicle door (130), wherein the door locking device (2) is configured such that it is arranged to lock the additional vehicle door (130) when the buckle locking device (31) is received in the buckle locking device receiver (21) and arranged to unlock the additional vehicle door (130) when the buckle locking device (31) is released from the buckle locking device receiver (21).

Example 9: The locking arrangement (1) according to Example 8, wherein the door locking device (2) comprises an additional mechanical locking element (24) for locking the additional vehicle door (130), wherein the additional mechanical locking element (24) is movable between a locked vehicle door state and an unlocked vehicle door state, and wherein the door locking device (2) is configured such that a motion of the additional mechanical locking element (24) from the unlocked vehicle door state to the locked vehicle door state is at least partly initiated in response to an electric signal (E1) generated in response to the buckle locking device (31) being received in the buckle locking device receiver (21).

Example 10: The locking arrangement (1) according to Example 9, wherein the door locking device (2) is configured such that a motion of the additional mechanical locking element (24) from the locked vehicle door state to the unlocked vehicle door state is at least partly initiated in response to a second electric signal generated in response to an actuation instruction from the vehicle user.

Example 11: The locking arrangement (1) according to any one of the preceding Examples, wherein the buckle locking device (31) is attached to the seatbelt (3) such that it can slide along a longitudinal extension of the seatbelt (3).

Example 12: The locking arrangement (1) according to any one of the preceding Examples, wherein the seatbelt (3) is a seatbelt which length can be expanded and retracted by a winding member which biases the seatbelt (3) to a retracted state.

Example 13: The locking arrangement (1) according to any one of the preceding Examples, wherein the vehicle door is arranged to be locked and unlocked by an additional lock.

Example 14: The locking arrangement (1) according to Example 13, wherein the additional lock is arranged to automatically lock the vehicle door when the vehicle is in motion, and/or wherein the additional lock is arranged to be automatically unlocked when the vehicle is provided in a stationary state.

Example 15: A vehicle (100) comprising the vehicle door (110) and the locking arrangement (1) according to any one of the preceding Examples.

Example 16: The vehicle (100) according to Example 15, wherein the buckle locking device receiver (21) is provided in the vehicle (100) such that when the buckle locking device (31) is received in the buckle locking device receiver (21), the seatbelt (3) is prevented from fastening the vehicle user to the vehicle seat (120).

Example 17: The vehicle (100) according to Example 15 or 16, wherein the buckle locking device receiver (21) is arranged on an inside of the vehicle door (110) or at a position inside the vehicle (100) adjacent the vehicle door (110).

Example 18: The vehicle (100) according to any one of Examples 15-17, wherein the buckle locking device receiver (21) is provided on a lateral side (121) of the vehicle seat (120) which is facing the vehicle door (110).

Example 19: The vehicle (100) according to any one of Examples 15-18, wherein the vehicle seat (120) is a driver seat.

Example 20: The vehicle (100) according to any one of Examples 15-19, wherein the vehicle door (110) is a door for accessing a driver seat (120) for a driver.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A locking arrangement (1) for locking a vehicle door (110) of a vehicle (100) from an inside, the locking arrangement (1) comprising:
- a door locking device (2) arranged to lock the vehicle door (110),
- a seatbelt (3) for a vehicle user comprising a buckle locking device (31) configured to be releasably locked to a seatbelt buckle (32) such that the seatbelt (3) fastens the vehicle user to a vehicle seat (120),
wherein
the door locking device (2) comprises a buckle locking device receiver (21), different from the seatbelt buckle (32) and arranged to receive the buckle locking device (31), and
the door locking device (2) is configured such that it is arranged to lock the vehicle door (110) when the buckle locking device (31) is received in the buckle locking device receiver (21) and arranged to unlock the vehicle door (110) when the buckle locking device (31) is released from the buckle locking device receiver (21).

2. The locking arrangement (1) according to claim 1, wherein the door locking device (2) comprises a mechanical locking element (22) for locking the vehicle door (110), wherein the mechanical locking element (22) is movable between a locked vehicle door state and an unlocked vehicle door state, and wherein the mechanical locking element (22) and the buckle locking device receiver (21) are mechanically connected such that a motion of the mechanical locking element (22) from the unlocked vehicle door state to the locked vehicle door state is at least partly generated by a force (F 1) created in the buckle locking device receiver (21) when the buckle locking device (31) is being received in the buckle locking device receiver (21).

3. The locking arrangement (1) according to any one of the preceding claims, further comprising an actuation device (23) configured to release the buckle locking device (31) from the buckle locking device receiver (21) in response to an actuation instruction from the vehicle user.

4. The locking arrangement (1) according to claim 3, wherein the actuation device (23) is provided on the buckle locking device receiver (21).

5. The locking arrangement (1) according to claim 3 or 4, wherein the actuation device (23) comprises button.

6. The locking arrangement (1) according to any one of the preceding claims, wherein the buckle locking device (31) is a buckle tongue.

7. The locking arrangement (1) according to any one of the preceding claims, comprising a seatbelt arrangement (30), the seatbelt arrangement (30) comprising the seatbelt (3) and the seatbelt buckle (32).

8. The locking arrangement (1) according to any one of claims 1-7, wherein the door locking device (2) is further arranged to lock an additional vehicle door (130), wherein the door locking device (2) is configured such that it is arranged to lock the additional vehicle door (130) when the buckle locking device (31) is received in the buckle locking device receiver (21) and arranged to unlock the additional vehicle door (130) when the buckle locking device (31) is released from the buckle locking device receiver (21).

9. The locking arrangement (1) according to claim 8, wherein the door locking device (2) comprises an additional mechanical locking element (24) for locking the additional vehicle door (130), wherein the additional mechanical locking element (24) is movable between a locked vehicle door state and an unlocked vehicle door state, and wherein the door locking device (2) is configured such that a motion of the additional mechanical locking element (24) from the unlocked vehicle door state to the locked vehicle door state is at least partly initiated in response to an electric signal (E1) generated in response to the buckle locking device (31) being received in the buckle locking device receiver (21).

10. A vehicle (100) comprising the vehicle door (110) and the locking arrangement (1) according to any one of the preceding claims.

11. The vehicle (100) according to claim 10, wherein the buckle locking device receiver (21) is provided in the vehicle (100) such that when the buckle locking device (31) is received in the buckle locking device receiver (21), the seatbelt (3) is prevented from fastening the vehicle user to the vehicle seat (120).

12. The vehicle (100) according to claim 10 or 11, wherein the buckle locking device receiver (21) is arranged on an inside of the vehicle door (110) or at a position inside the vehicle (100) adjacent the vehicle door (110).

13. The vehicle (100) according to any one of claims 10-12, wherein the buckle locking device receiver (21) is provided on a lateral side (121) of the vehicle seat (120) which is facing the vehicle door (110).

14. The vehicle (100) according to any one of claims 10-13, wherein the vehicle seat (120) is a driver seat.

15. The vehicle (100) according to any one of claims 10-14, wherein the vehicle door (110) is a door for accessing a driver seat (120) for a driver.
